# EUROPÄISCHE PATENTSCHRIFT

(11) **EP 3 296 012 B1**
(45) Veröffentlichungstag und Bekanntmachung des Hinweises auf die Patenterteilung: **26.06.2019**
(21) Anmeldenummer: 17182042.6
(22) Anmeldetag: 19.07.2017
(51) Int. Cl.: B01F 3/02

(54) **VERFAHREN UND VORRICHTUNG ZUR ERZEUGUNG EINES KONTINUIERLICHEN TRAEGERGAS/DAMPF-GEMISCH-STROMES**
METHOD AND DEVICE FOR CREATING A CONTINUOUS CARRIER GAS/STEAM VAPOUR FLOW
PROCÉDÉ ET DISPOSITIF DE FABRICATION D'UN FLUX DE MÉLANGE VAPEUR/GAZ PORTEUR CONTINU

(30) Priorität: 15.09.2016 DE 102016117333; 08.02.2017 DE 102017102446
(43) Veröffentlichungstag der Anmeldung: 21.03.2018
(73) Patentinhaber: Netzsch-Gerätebau GmbH, 95100 Selb (DE)
(72) Erfinder: Denner, Thomas, 95100 Selb Bayern (DE); Storch, Georg, 95100 Selb Bayern (DE); Zuber, Alexander, 95694 Mehlmeisel Bayern (DE); Schmidt, Christoph, 95030 Hof Bayern (DE); Hanss, Jan, 95100 Selb Bayern (DE); Hilpert, Thilo, 95100 Selb Bayern (DE); Weuthen, Falko, 95100 Selb Bayern (DE)

(56) Entgegenhaltungen:
- GB-A- 741 790
- GB-A- 1 213 723
- US-A- 5 014 908

## Beschreibung

Die vorliegende Erfindung betrifft ein Verfahren sowie eine Vorrichtung zur Erzeugung eines kontinuierlichen Trägergas/Dampf-Gemisch-Stromes beinhaltend einstellbare Anteile einerseits eines Trägergases und andererseits eines Dampfes einer Flüssigkeit.

Derartige Verfahren und Vorrichtungen sind aus dem Stand der Technik bekannt und können insbesondere im Rahmen der Untersuchung von Materialeigenschaften unter vorbestimmten und gegebenenfalls veränderlich vorbestimmten Umgebungsbedingungen eingesetzt werden. Beispiele hierfür sind die Untersuchung des Sorptionsvermögens, der (z. B. thermischen) Längenausdehnung, der Steifigkeit, der kristallographischen Struktur etc. einer Materialprobe, welche in einer von dem Trägergas/Dampf-Gemisch-Strom durchströmten Probenkammer angeordnet ist.

Bei dem Trägergas kann es sich insbesondere um ein Inertgas (z. B. Stickstoff, Helium, Argon etc., oder Mischungen von Edelgasen) handeln. Bei der dampfförmigen Komponente bzw. der Flüssigkeit, dessen Dampf im Trägergas/Dampf-Gemisch-Strom enthalten ist, handelt es sich zumeist um Wasser, jedoch sind auch Gemische mit Dämpfen organischer Verbindungen wie z. B. Alkoholen bekannt.

Im Stand der Technik sind folgende Verfahren zur Erzeugung von Trägergas/Dampf-Gemischen mit dem Ziel der Erzeugung einer vorbestimmten Dampfkonzentration (gleichbedeutend vorbestimmten Anteilen des Trägergases und des Dampfes) etabliert:
- Verdampfung der Flüssigkeit und Bereitstellung des Trägergases, und nachfolgende Dosierung/Mischung beider Komponenten im gasförmigen Zustand.
- Verdampfung eines zuvor dosierten Flüssigkeitsstromes und Zumischung eines dosierten Trägergasstromes (so genanntes "Direktverdampfungsverfahren").
- Mischung eines mit der dampfförmigen Komponente gesättigten Trägergasstromes sowie eines reinen Trägergasstromes.
- Erzeugung eines mit der dampfförmigen Komponente gesättigten Trägergasstromes und gezielte Auskondensation überschüssigen Dampfes an einer Wärmetauscherfläche. GB741790 offenbart ein Verfahren und ein Gerät zur Erzeugung eines Gas-DampfGemisches.

Die Dosierung aller Komponenten im gasförmigen Zustand ist mit erheblichen technischen Schwierigkeiten behaftet, da die Mengenstrommessung zur Vermeidung von Rekondensation bei erhöhter Temperatur erfolgen muss. Im Falle von Wasser als Dampfkomponente muss die Temperatur z. B. größer als 100°C sein. Viele kommerziell erhältliche Mengenstrommessgeräte scheiden dadurch aus, bzw. es müssen teure Speziallösungen für hohe Medientemperaturen gewählt werden.

Die Genauigkeit bei der Erreichung einer Zielkonzentration des Dampfes wird beim Verfahren der Direktverdampfung durch die Dosiergenauigkeit der flüssigen Komponente limitiert. Oftmals ist z. B. der Flüssigkeitsmassenstrom so gering, dass dieser sich nicht hinreichend genau ("langsam strömend") dosieren und/oder nicht gleichmäßig verdampfen lässt. Ein weiterer Nachteil der Direktverdampfung sind relativ große Anstiegs- und vor allem Abfallzeiten der Dampfkonzentration bei einem Verändern der dosierten Flüssigkeitsmenge zwischen Null und einem von Null verschiedenen Zielwert (typischerweise im Bereich mehrerer Minuten).

Die Verfahren, bei denen zunächst ein mit der dampfförmigen Komponente gesättigter Trägergasstrom hergestellt wird, sind dadurch nachteilig, dass auf Grund der notwendigen Beteiligung von Trägergas keine reine Dampfatmosphäre (Dampfkonzentration 100 %) und auch keine Konzentration nahe an 100 % erzielt werden kann.

Die Verfahren einer Mischung eines gesättigten und eines dampffreien Trägergasstromes sind im Wesentlichen auf die Verwendung von Wasser als dampfförmiger Komponente beschränkt, da nur für diesen Fall die Messung der Dampfkonzentration besonders einfach zu bewerkstelligen ist (z. B. mittels kommerziell verfügbarer Fühler für Luftfeuchtigkeit).

Es ist eine Aufgabe der vorliegenden Erfindung, die vorstehend geschilderten Nachteile des Stands der Technik zu überwinden und ein Verfahren sowie eine Vorrichtung zur Erzeugung eines kontinuierlichen Trägergas/Dampf-Gemisch-Stromes bereitzustellen, mittels welchen die Konzentration der Dampfkomponente mit geringer Verzögerung und hoher Genauigkeit in einem weiten Bereich eingestellt werden kann.

Diese Aufgabe wird gemäß der Erfindung gelöst durch ein Verfahren nach Anspruch 1 bzw. eine Vorrichtung nach Anspruch 4. Die abhängigen Ansprüche betreffen vorteilhafte Weiterbildungen der Erfindung.

Die Grundidee der Erfindung besteht darin,
- bei einer Zielkonzentration der Dampfkomponente von Null einen eigens hierfür bereitgestellten "ersten dosierten Trägergasstrom" als den zu erzeugenden Trägergas/Dampf-Gemisch-Strom zu verwenden,
- bei einer relativ geringen Zielkonzentration der Dampfkomponente ein Mischverfahren (Mischung eines "zweiten dosierten Trägergasstromes" mit einem "dosierten gesättigten Trägergas/Dampf-Gemisch-Strom") einzusetzen, und
- im Falle einer relativ hohen Zielkonzentration der Dampfkomponente das Direktverdampfungsverfahren einzusetzen (unter Verwendung eines "dosierten Flüssigkeitsstromes", der verdampft und mit dem ersten gasförmigen Mischungsstrom gemischt wird, um einen "zweiten gasförmigen Mischungsstrom" zu erhalten).

Bei der dampfförmigen Komponente bzw. der Flüssigkeit, dessen Dampf im Trägergas/Dampf-Gemisch-Strom enthalten ist, kann es sich insbesondere z. B. um Wasser handeln.

Der Begriff "relativ niedrig" kann insbesondere z. B. bedeuten, dass die Konzentration zwar größer als Null, jedoch kleiner (alternativ: kleiner oder gleich) als ein vorgegebener, z. B. fest vorgegebener erster Schwellwert ist.

Der Begriff "relativ hoch" kann insbesondere z. B. bedeuten, dass die Konzentration gleich oder größer (alternativ: größer) als ein zweiter Schwellwert ist, der z. B. gleich dem ersten Schwellwert sein kann. Alternativ kann der zweite Schwellwert größer als der erste Schwellwert vorgegeben werden.

In einer Ausführungsform wird ein erster Schwellwert verwendet, der in einem Bereich von 10 bis 50 % vorgegeben ist und/oder ein zweiter Schwellwert verwendet, der in einem Bereich von 30 bis 70 % vorgegeben ist.

Im Falle eines relativ niedrig einzustellenden Dampfanteils im Trägergas/Dampf-Gemisch-Strom wird der "erste gasförmige Mischungsstrom" als der Trägergas/Dampf-Gemisch-Strom verwendet, wobei in diesem Betriebsmodus der Dampfanteil in weiten Grenzen eingestellt werden kann, nämlich von quasi Null (fast Null) bis hin zu einem Dampfanteil, bei welchem das Trägergas mit dem Dampf gesättigt ist. Eine derartige Variation des Dampfanteils kann durch entsprechende Variation der Dosierung des gesättigten Trägergas/Dampf-Gemisch-Stromes und/oder Variation der Dosierung des zweiten dosierten Trägergasstromes bewerkstelligt werden.

Demgegenüber wird im Falle eines relativ hoch einzustellenden Dampfanteils im Trägergas/Dampf-Gemisch-Strom der "zweite gasförmige Mischungsstrom" als der Trägergas/Dampf-Gemisch-Strom verwendet, wobei in diesem Betriebsmodus für eine Variation des Dampfanteils grundsätzlich zwei Realisierungsmöglichkeiten bestehen, die einzeln oder miteinander kombiniert eingesetzt werden können: Zum einen besteht die Möglichkeit, die Zusammensetzung des ersten gasförmigen Mischungsstromes wie bereits erläutert zu variieren. Darüber hinaus besteht die Möglichkeit, die Dosierung des Flüssigkeitsstromes zu variieren.

Sämtliche für der Zielkonzentration der Dampfkomponente hier angegebenen Prozentangaben sind "molare Dampfkonzentrationen", also Verhältnisse der Dampfmenge (Stoffmenge/Teilchenzahl oder normiertes Volumen) zur Gesamtmenge (Stoffmenge/Teilchenzahl bzw. normiertes Volumen) des Trägergas/Dampf-Gemisch-Stromes.

Die Flussrate (Masse oder Volumen pro Zeit) des mittels der Erfindung erzeugten Trägergas/Dampf-Gemisch-Stromes ist bevorzugt einstellbar (durch entsprechende Ansteuerung der Dosierungen) und kann insbesondere z. B. in einem Bereich einstellbar sein, der z. B. von Null bis zu einem Maximalwert reicht, wobei dieser Maximalwert z. B. in einem Bereich von 50 bis 5000 ml/min liegen kann.

In einer Ausführungsform wird der Trägergas/Dampf-Gemisch-Strom mit einem Druck von etwa 1 bar (etwa atmosphärischer Druck) erzeugt. In einer Ausführungsform wird der Trägergas/Dampf-Gemisch-Strom mit Überdruck erzeugt. Auch ist es denkbar, dass dieser Druck in einem vorbestimmten Bereich einstellbar ist. Eine Erzeugung bzw. Einstellung des Druckes kann hierbei z. B. auch mittelbar dadurch realisiert sein, dass unmittelbar ein bestimmter Durchsatz des Trägergas/Dampf-Gemisch-Stromes erzeugt bzw. eingestellt wird und der Druck sich dann entsprechend dem Strömungswiderstand bzw. Druckverlust an den nachgeordneten Komponenten ("Zielsystem") ergibt.

In einer Ausführungsform ist vorgesehen, dass die Verwendung des ersten dosierten Trägergasstromes, des ersten gasförmigen Mischungsstromes bzw. des zweiten gasförmigen Mischungsstromes als den Trägergas/Dampf-Gemisch-Strom mittels einer Ventileinrichtung realisiert wird, die hierfür derart umgeschaltet wird, dass der aktuell zu verwendende der Ströme an einem Nutzauslass der Ventileinrichtung bereitgestellt wird, wohingegen wenigstens ein aktuell nicht zu verwendender der Ströme an einem Abgasauslass der Ventileinrichtung abströmen gelassen wird. Alternativ zu einem Abströmenlassen z. B. in die Atmosphäre kann vorgesehen sein, das das "Abgas" gesammelt wird, um dieses zu recyclen, z. B. daraus das Trägergas rückzugewinnen (sei es zur Wiederverwendung in derselben Vorrichtung, oder zu anderen Zwecken).

In einer Ausführungsform ist vorgesehen, dass das Bereitstellen des dosierten gesättigten Trägergas/Dampf-Gemisch-Stromes folgende Schritte umfasst:
- Bereitstellen eines dritten dosierten Trägergasstromes,
- Bereitstellen eines weiteren dosierten Flüssigkeitsstromes,
- Zuführen des dritten dosierten Trägergasstromes und des weiteren dosierten Flüssigkeitsstromes zu einer Verdampfungs-/Sättigungs-Einrichtung zum Verdampfen der Flüssigkeit und Mischen mit dem dritten dosierten Trägergasstrom. Der hier verwendete Begriff "Verdampfung" ist insofern weitgehend zu verstehen, als darunter jeder Übergang vom flüssigen in den gasförmigen Zustand fallen soll, also insbesondere auch eine "Verdunstung" bei Temperaturen unterhalb der durch den Absolutdruck festgelegten Siedetemperatur.

Die Verdampfungs/Sättigungs-Einrichtung kann in vielfältiger Weise realisiert sein, z. B. als Blasenkolonne, Wäscher (z. B. "Waschflasche") oder Nebler.

Bei jedem der erfindungsgemäß bereitgestellten ersten, zweiten und gegebenenfalls dritten dosierten Trägergasströme kann es sich insbesondere um einen dosierten Inertgasstrom (z. B. Luft, Stickstoff, Helium, Argon etc., oder z. B. Mischung von Edelgasen) handeln. Zur Dosierung kann z. B. ein thermischer Durchflussregler (MFC), ein Coriolis-Durchflussregler oder Proportionalventil verwendet werden. "Inert" meint im Sinne der Erfindung in erster Linie und ganz allgemein, dass keine Reaktion mit dem Dampf stattfindet. Ein erfindungsgemäß verwendeter Inertgasstrom kann jedoch insbesondere auch "inert im chemischen Verständnis" sein.

Das Mischen des zweiten dosierten Trägergasstromes und des dosierten gesättigten Trägergas/Dampf-Gemisch-Stromes kann im einfachsten Fall in einer Mischkammer durchgeführt werden, welcher die genannten Ströme an einen jeweiligen Einlass zugeführt und aus welcher der resultierende erste gasförmige Mischungsstrom an einem Auslass abgeführt wird.

Das Bereitstellen des dosierten Flüssigkeitsstromes wie auch des gegebenenfalls vorgesehenen weiteren dosierten Flüssigkeitsstromes kann in vielfältiger Weise ausgeführt sein, z. B. unter Verwendung eines thermischen Durchflussreglers, eines Proportionalventils, einer Spritzenpumpe oder einer Membranpumpe. Speziell für den "weiteren dosierten Flüssigkeitsstrom" ist die Dosieranforderung jedoch insofern gering, als bei den üblichen Bauformen der damit versorgten "Verdampfungs-/Sättigungs-Einrichtung" nur sichergestellt sein muss, dass z. B. ein Füllstand der Flüssigkeit in einem Sättiger (z. B. Waschflasche oder ähnliches) einen vorgesehenen Arbeitsbereich nicht verlässt. Dies kann z. B. auch diskontinuierlich erfolgen, z. B. durch ein bedarfsweises Nachfüllen von Flüssigkeit, z. B. bei Unterschreiten eines unteren Grenzwertes des Füllstandes. Insofern ist für den weiteren dosierten Flüssigkeitsstrom in vielen Fällen grundsätzlich auch ein angesteuertes Auf-/Zu-Ventil in Verbindung mit einer Füllstandsmessung für das "Dosieren" ausreichend.

Das Verdampfen des dosierten Flüssigkeitsstromes und Mischen mit dem ersten gasförmigen Mischungsstrom kann im einfachsten Fall unter Verwendung eines beheizten Rohrstückes ausgeführt werden, welches Anschlüsse zur Zufuhr bzw. Abfuhr der entsprechenden Ströme aufweist. Falls eine möglichst gleichmäßige, pulsationsfreie Verdampfung angestrebt wird, so können hierfür auch technisch komplexere Lösungen eingesetzt werden.

Die zur Bereitstellung des dosierten Flüssigkeitsstromes benötigte Flüssigkeit kann z. B. einem Behälter zur Bevorratung der Flüssigkeit entnommen (und einer Vorrichtung zur Dosierung eines flüssigen Mediums zugeführt) werden. Zweckmäßigerweise kann der Behälter druckfest und diffusionsdicht ausgebildet sein, um das in Lösung gehen unerwünschter gasförmiger Komponenten zu unterbinden. Mittels einer nachgeordneten Vorrichtung zur Flüssigkeitsdosierung kann die Flüssigkeit in kontrolliertem Mengenstrom der Verdampfungs-/Misch-Einrichtung zugeführt werden.

In einer Weiterbildung der Erfindung wird ein Feuchtesensor verwendet, um die tatsächliche Dampfkonzentration des ersten gasförmigen Mischungsstromes zu erfassen, was den Vorteil besitzt, dass basierend auf dem Ergebnis der Erfassung z. B. regelnd auf die Mengenströme einerseits des zweiten dosierten Trägergasstromes und andererseits des dosierten gesättigten Trägergas/Dampf-Gemisch-Stromes eingewirkt werden kann. Ein solcher Feuchtesensor kann in vielfältiger Weise ausgeführt sein, z. B. als feuchteempfindlicher Plattenkondensator, Taupunktspiegelhygrometer oder ähnliches.

Alternativ oder zusätzlich zu dem erwähnten Feuchtesensor zur Erfassung der Dampfkonzentration des ersten gasförmigen Mischungsstromes können ein oder mehrere Feuchtesensoren zur Erfassung der Dampfkonzentration anderer, im Rahmen der Erfindung vorgesehener Ströme eingesetzt werden. Insbesondere ist es von Vorteil, wenn ein Feuchtesensor zur Erfassung der tatsächlichen Dampfkonzentration des erzeugten Trägergas/Dampf-Gemisch-Stromes eingesetzt wird. Sensorsignale dieses und/oder anderer Feuchtesensoren und/oder Durchflussmengenmesser können vorteilhaft insbesondere für eine Regelung des Dampfanteils im erzeugten Trägergas/Dampf-Gemisch-Stromes genutzt werden.

Bei der erfindungsgemäßen Vorrichtung kann vorgesehen sein, dass die Mittel zum Bereitstellen des ersten dosierten Trägergasstromes und/oder die Mittel zum Bereitstellen des zweiten dosierten Trägergasstromes aufweisen:
- einen Trägergaszufuhranschluss oder ein Trägergasreservoir,
- eine steuerbare Dosiereinrichtung zur Gasdosierung.

Analoges gilt für die Mittel zur Bereitstellung des gegebenenfalls vorgesehenen dritten dosierten Trägergasstromes.

In einer Ausführungsform ist vorgesehen, dass die Mittel zum Bereitstellen des dosierten, mit Dampf gesättigten Trägergas/Dampf-Gemisch-Stromes aufweisen:
- Mittel zum Bereitstellen eines dritten dosierten Trägergasstromes,
- Mittel zum Bereitstellen eines weiteren dosierten Flüssigkeitsstromes,
- eine Verdampfungs-/Sättigungs-Einrichtung zum Verdampfen der Flüssigkeit des weiteren dosierten Flüssigkeitsstromes und zum Mischen mit dem dritten dosierten Trägergasstrom.

In einer Ausführungsform ist vorgesehen, dass die Mittel zum Bereitstellen des dosierten Flüssigkeitsstromes aufweisen:
- einen Flüssigkeitszufuhranschluss oder ein Flüssigkeitsreservoir,
- eine steuerbare Dosiereinrichtung zur Flüssigkeitsdosierung.

In einer Ausführungsform ist vorgesehen, dass die Mittel zum Auswählen des als den Trägergas/Dampf-Gemisch-Strom zu verwendenden Stromes von einer Ventileinrichtung gebildet sind, die derart steuerbar umschaltbar ausgebildet ist, dass der aktuell zu verwendende der Ströme an einem Nutzauslass der Ventileinrichtung bereitgestellt wird, wohingegen wenigstens ein aktuell nicht verwendeter der Ströme an einem Abgasauslass der Ventileinrichtung abströmen gelassen wird.

In einer Weiterbildung dieser Ausführungsform weist die Ventileinrichtung ein 4/2-Wegeventil auf
- mit einem ersten Ventilanschluss zur Zufuhr des ersten dosierten Trägergasstromes,
- mit einem zweiten Ventilanschluss zur Zufuhr des zweiten bzw. dritten gasförmigen Mischungsstromes,
- mit einem dritten Ventilanschluss, als "Nutzanschluss", zum Bereitstellen des Trägergas/Dampf-Gemisch-Stromes, und
- mit einem vierten Ventilanschuss, als "Abgasanschluss", zum Abströmenlassen nicht zu verwendender Ströme,
wobei in einer ersten Schaltstellung des Ventils der erste Ventilanschluss mit dem dritten Ventilanschluss und der zweite Ventilanschluss mit dem vierten Ventilanschluss verbunden ist,
und wobei in einer zweiten Schaltstellung des Ventils der erste Ventilanschluss mit dem vierten Ventilanschluss und der zweite Ventilanschluss mit dem dritten Ventilanschluss verbunden ist.

Bei der Erfindung wird bevorzugt eine z. B. zentrale Steuereinrichtung (z. B. Mikrocontroller) verwendet, um die zur Gas- bzw. Flüssigkeitsdosierung eingesetzten Einrichtungen sowie die zum Auswählen des betreffenden Stromes als den Trägergas/Dampf-Gemisch-Strom verwendete Einrichtung (z. B. 4/2-Wegeventil) gemäß einer vorgegebenen Zielkonzentration der dampfförmigen Komponente anzusteuern.

Bei der Ansteuerung wenigstens einer, insbesondere mehrerer oder sämtlicher angesteuerten Dosiereinrichtungen kann insbesondere eine Regelung realisiert sein, indem entsprechende Sensoreinrichtungen zur Messung der betreffenden tatsächlichen Mengenströme verwendet werden, deren Sensorsignale der erwähnten Steuereinrichtung zur Realisierung entsprechender Regelschleifen zugeführt werden.

Gemäß einer Ausführungsform ist die Steuereinrichtung dazu ausgebildet, ein von einem Benutzer eingebbares "Konzentrationsprogramm" (zeitabhängiger Verlauf der gewünschten Anteile an Trägergas und Dampf bzw. gewünschter Zielkonzentration der Dampfkomponente) abzuspeichern und sodann automatisiert durch entsprechende Ansteuerung der ansteuerbaren Einrichtungen abzuarbeiten.

Die Erfindung wird nachfolgend anhand eines Ausführungsbeispiels mit Bezug auf die beigefügten Zeichnungen weiter beschrieben. Es stellen dar:
- Fig. 1: ein Flussdiagramm des erfindungsgemäßen Verfahrens zur Erzeugung eines kontinuierlichen Trägergas/Dampf-Gemisch-Stromes gemäß des Ausführungsbeispiels,
- Fig. 2: ein Flussdiagramm eines Verfahrens, mittels welchem im Ausführungsbeispiel der gesättigte Trägergas/Dampf-Gemisch-Strom bereitgestellt wird,
- Fig. 3: ein Blockdiagramm einer Vorrichtung zur Durchführung des erfindungsgemäßen Verfahrens gemäß des Ausführungsbeispiels, und
- Fig. 4: ein beispielhaftes Zeitverlaufsdiagramm zur Veranschaulichung einer zeitlichen Variation einer Zielkonzentration der dampfförmigen Komponente und der hierbei geleisteten Beiträger einerseits des ersten gasförmigen Mischungsstromes und andererseits des zweiten gasförmigen Mischungsstromes.

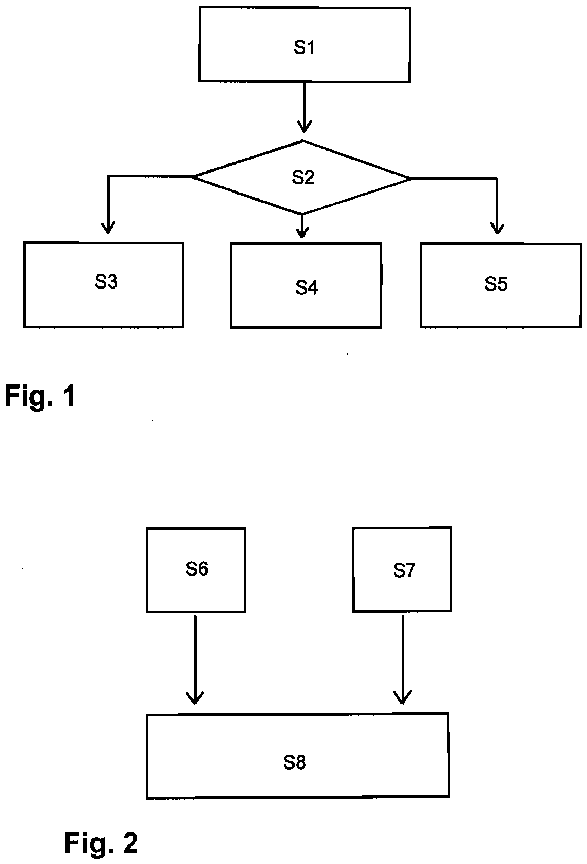

Fig. 1 veranschaulicht wesentliche Schritte eines Verfahrens zur Erzeugung eines kontinuierlichen Trägergas/Dampf-Gemisch-Stromes.

In einem Schritt S1 erfolgt eine Definition einer Zielkonzentration der dampfförmigen Komponente (Anteil des Dampfes im Trägergas/Dampf-Gemisch-Strom), sei es z. B. durch eine direkte Vorgabe eines Benutzers oder im Rahmen einer automatischen Abarbeitung eines "Konzentrationsprogrammes", welches einen (vorab durch einen Benutzer eingegebenen) zeitabhängigen Verlauf dieser Zielkonzentration festlegt. Bevorzugt ist im Schritt S1 auch eine Definition einer Gesamtflussrate (z. B. Masse pro Zeit oder Volumen pro Zeit) des Trägergas/Dampf-Gemisch-Stromes ermöglicht, oder gleichbedeutend eine Definition der Mengenflussraten des Trägergasanteils und des Dampfanteils. Letztere, auf die Flussraten abzielende Größen können ebenfalls z. B. durch das genannte Konzentrationsprogramm vorgegeben sein.

In einem Schritt S2 erfolgt eine Beurteilung der momentan vorgegebenen Zielkonzentration dahingehend, ob diese Null ist, oder relativ niedrig ist, oder relativ hoch ist.

Der Begriff "relativ niedrig" kann z. B. bedeuten, dass die Konzentration zwar größer als Null, jedoch kleiner als ein fest vorgegebener Schwellwert ist, und der Begriff "relativ hoch" kann hier z. B. bedeuten, dass die Konzentration größer als dieser Schwellwert ist.

Falls im Schritt S2 beurteilt wird, dass der Dampfanteil auf Null einzustellen ist, so schreitet die Verarbeitung zu einem Schritt S3, in dem ein erster dosierter Trägergasstrom als der zu erzeugende Trägergas/Dampf-Gemisch-Strom verwendet wird.

Falls im Schritt S2 beurteilt wird, dass der einzustellende Dampfanteil relativ niedrig ist, so schreitet die Verarbeitung zu einem Schritt S4, in dem stattdessen ein erster gasförmiger Mischungsstrom verwendet wird, welcher erzeugt wird durch Mischen eines zweiten dosierten Trägergasstromes mit einem bereitgestellten dosierten, mit Dampf gesättigten Trägergas/Dampf-Gemisch-Strom.

Falls im Schritt S2 beurteilt wird, dass der einzustellende Dampfanteil relativ hoch ist, so schreitet die Verarbeitung zu einem Schritt S5, in dem ein zweiter gasförmiger Mischungsstrom verwendet wird, der erzeugt wird durch Bereitstellen eines dosierten Flüssigkeitsstromes, Zuführen desselben zu einer Verdampfungs/Mischeinrichtung zum Verdampfen der Flüssigkeit und Mischen mit dem ersten gasförmigen Mischungsstrom.

Sodann schreitet die Verarbeitung wieder zurück zum Schritt S1.

Bei der Durchführung der Schritte S4 und S5 werden jeweils außerdem, in Abhängigkeit von der im Schritt S1 definierten Zielkonzentration (und ggf. in Abhängigkeit von einer zeitlichen Entwicklung dieser Zielkonzentration bzw. einer zukünftig einzustellenden Zielkonzentration), die jeweils relevanten Dosierungen eingestellt.

Bei der Durchführung des Schritts S4 sind dies die Dosierung des zweiten dosierten Trägergasstromes und die Dosierung des mit Dampf gesättigten Trägergas/Dampf-Gemisch-Stromes.

Bei der Durchführung des Schritts S5 werden dieselben vorgenannten Dosierungen (wie beim Schritt S4) eingestellt, zusätzlich jedoch noch die Dosierung des Flüssigkeitsstromes, welcher verdampft und mit dem ersten gasförmigen Mischungsstrom gemischt wird.

Fig. 2 veranschaulicht die im beschriebenen Ausführungsbeispiel verwendete Art und Weise der Bereitstellung des dosierten gesättigten Trägergas/Dampf-Gemisch-Stromes.

Hierzu wird in einem Schritt S6 ein dritter dosierter Trägergasstrom bereitgestellt und in einem Schritt S7 ein weiterer dosierter Flüssigkeitsstrom bereitgestellt.

In einem Schritt S8 wird der dritte dosierte Trägergasstrom und der weitere dosierte Flüssigkeitsstrom zu einer Verdampfungs/Sättigungs-Einrichtung zugeführt, um die Flüssigkeit zu verdampfen und mit dem dritten dosierten Trägergasstrom zu mischen.

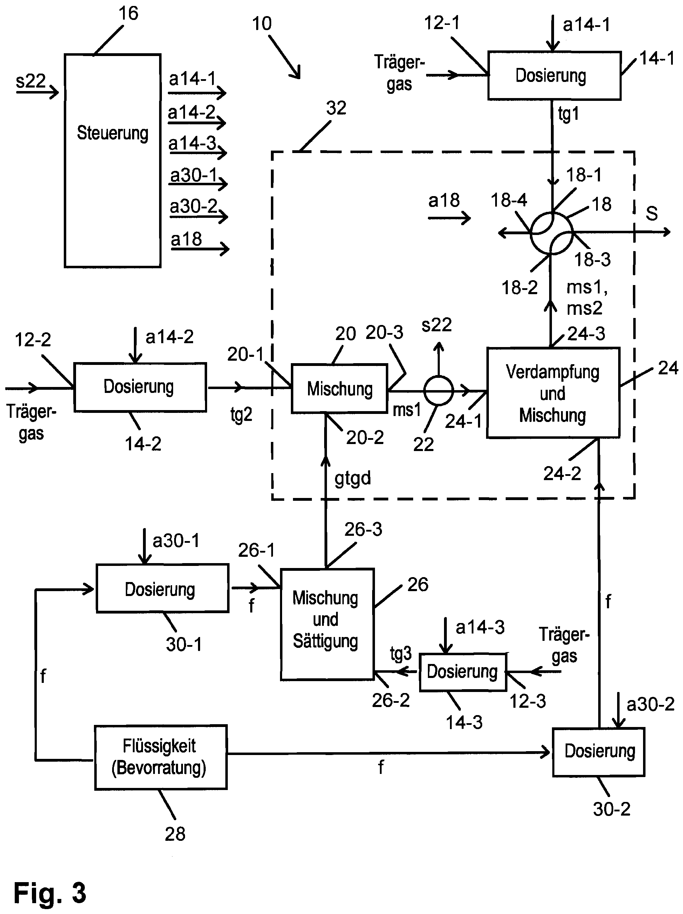

Fig. 3 zeigt eine gemäß des beschriebenen Ausführungsbeispiels vorgesehene Vorrichtung 10 zur Erzeugung des kontinuierlichen Trägergas/Dampf-Gemisch-Stromes S.

Die Vorrichtung 10 umfasst Gaseinlässe 12-1, 12-2 und 12-3 zur Zufuhr von Trägergas (hier z. B. Helium). Das Trägergas wird z. B. aus einer für die Gaseinlässe 12-1 bis 12-3 gemeinsam genutzten Vorratsflasche bereitgestellt.

Die Gaseinlässe 12-1 bis 12-3 leiten das Trägergas wie dargestellt zu jeweils einer zugeordneten, steuerbaren Gasdosiereinrichtung 14-1, 14-2 bzw. 14-3, um einen ersten dosierten Trägergasstrom tg1, einen zweiten dosierten Trägergasstrom tg2 und einen dritten dosierten Trägergasstrom tg3 bereitzustellen. Die Vorrichtung 10 umfasst des Weiteren eine zentrale Steuereinrichtung (hier: Mikrocontroller) 16, welche unter anderem die Gasdosiereinrichtungen 14-1 bis 14-3 zur Erzielung eines jeweils im Rahmen eines ablaufenden Steuerprogrammes vorgegebenen Mengenstromes jedes der Trägergasströme tg1, tg2 und tg3 ansteuert. Die von der Steuereinrichtung 16 hierfür ausgegebenen Steuersignale sind in Fig. 3 mit a14-1, a14-2 und a14-3 bezeichnet.

Falls gemäß des Steuerprogramms vorgegeben wird, dass ein Dampfanteil in zu erzeugenden Trägergas/Dampf-Gemisch-Strom S auf Null einzustellen ist, so wird gemäß eines "ersten Betriebsmodus" mittels der Steuereinrichtung 16 ein 4/2-Wegeventil 18 derart angesteuert, dass ein erster Anschluss 18-1, welchem der erste dosierte Trägergasstrom tg1 zugeführt wird, mit einem dritten Anschluss 18-3 des Ventils 18 verbunden ist, an welchem der gewünschte Trägergas/Dampf-Gemisch-Strom S bereitgestellt wird (In diesem Fall jedoch mit einem Dampfanteil von Null).

Falls die Steuereinrichtung 16 jedoch feststellt, dass eine Dampfkonzentration einzustellen ist, die größer als Null und kleiner oder gleich 20 % ist, so steuert die Steuereinrichtung 16 gemäß eines "zweiten Betriebsmodus" das 4/2-Wegeventil 18 derart an, dass der zweite Anschluss 18-2 des Ventils 18 mit dem dritten Anschluss 18-3 des Ventils 18 verbunden ist (wie in Fig. 3 dargestellt).

In diesem Betriebsmodus gelangt an den als Nutzanschluss dienenden dritten Anschluss 18-3 des Ventils 18 ein "erster gasförmiger Mischungsstrom" ms1, welcher an einem Auslass 20-3 einer Mischeinrichtung 20 bereitgestellt wird, indem der an einem ersten Einlass 20-1 zugeführte zweite dosierte Trägergasstrom tg2 mit einem an einem zweiten Einlass 20-2 zugeführten dosierten, mit Dampf gesättigten Trägergas/Dampf-Gemisch-Strom gtgd gemischt wird.

Durch eine geeignete Dosierung einerseits des zweiten dosierten Trägergasstromes tg2 und andererseits des gesättigten Trägergas/Dampf-Gemisch-Stromes gtgd kann sowohl die Gesamtflussrate des ersten gasförmigen Mischungsstromes ms1 als auch die Konzentration des darin enthalten Dampfanteils in gewünschter Weise eingestellt werden.

Im dargestellten Ausführungsbeispiel wird der Strom ms1 über einen Feuchtesensor 22 zur Messung der tatsächlichen momentanen Dampfkonzentration geführt, so dass die Steuereinrichtung 16 anhand eines ihr vom Feuchtesensor 22 zugeführten Sensorsignals s22 eine Regelung der Dampfkonzentration im Strom ms1 durchführen kann.

Stromabwärts des Feuchtesensors 22 wird der Strom ms1 über eine Verdampfungs/Misch-Einrichtung 24 zum zweiten Anschluss 18-2 des Ventils 18 geführt, die jedoch im vorliegenden Betriebsmodus (relativ niedrig einzustellender Dampfanteil) bzw. zumindest bei sehr niedrig einzustellendem Dampfanteil gewissermaßen inaktiv ist. Der an einem Einlass 24-1 zugeführte Strom ms1 wird ohne weitere Modifikation an einem Auslass 24-3 wieder ausgelassen.

Das Bereitstellen des dosierten gesättigten Trägergas/Dampf-Gemisch-Stromes gtgd erfolgt im dargestellten Ausführungsbeispiel an einem Auslass 26-3 einer Verdampfungs/Sättigungs-Einrichtung 26 zum (im dargestellten Beispiel: thermisch getriebenen) Verdampfen einer an einem Einlass 26-1 zugeführten dosierten Flüssigkeit f und Mischen derselben mit dem an einem Einlass 26-2 zugeführten dritten dosierten Trägergasstrom tg3.

Die Flüssigkeit f entstammt im dargestellten Beispiel einem als Flüssigkeitsreservoir dienenden Behälter 28, aus welchem die Flüssigkeit f über eine erste Flüssigkeitsdosiereinrichtung 30-1 dem ersten Einlass 26-1 der Verdampfungs/Sättigungs-Einrichtung 26 zugeführt wird.

Ausgehend von dem Behälter 28 wird die Flüssigkeit f außerdem über eine zweite Flüssigkeitsdosiereinrichtung 30-2 einem zweiten Einlass 24-2 der Verdampfungs-/Misch-Einrichtung 24 zugeführt, was einen "dritten Betriebsmodus" der Vorrichtung 10 ermöglicht, der im Falle eines relativ hoch einzustellenden Dampfanteils im Trägergas/Dampf-Gemisch-Strom (z. B. größer als 20 %) gewählt wird und der dadurch gekennzeichnet ist, dass die Steuereinrichtung 16 das Ventil 18 wie im zweiten Betriebsmodus zur Verbindung des zweiten Ventilanschlusses 18-2 mit dem dritten Ventilanschluss 18-3 ansteuert, darüber hinaus jedoch auch die zweite Flüssigkeitsdosiereinrichtung 30-2 zu einer geeignet dosierten Zufuhr von Flüssigkeit f zu dem zweiten Einlass 24-2 ansteuert.

Für den dritten Betriebsmodus ist wesentlich, dass mittels der Flüssigkeitsdosiereinrichtung 30-2 eine Zudosierung von Flüssigkeit erfolgt, wobei zur Variation des letztlich gewünschten Dampfanteils eine Variation dieser Flüssigkeitsdosierung erfolgen kann. Alternativ oder zusätzlich zu einer Variation der Flüssigkeitsdosierung kann im dritten Betriebsmodus eine gewünschte Variation des letztlich erhaltenen Dampfanteils zumindest über einen gewissen Bereich auch durch eine Variation der Dosierungen an den Dosiereinrichtungen 14-2 und/oder 14-3 erfolgen.

Diejenigen Bereiche der Vorrichtung 10, in denen eine Strömung von Dampf enthaltenden Strömen (Ströme ms1, ms2, gtgd) vorgesehen ist, sollten zur Vermeidung eines Auskondensierens von Dampf beheizt sein. Im beschriebenen Beispiel wird daher der in Fig. 3 gestrichelt eingezeichnete Bereich 32 beheizt (z. B. auf mindestens 100°C im Falle von Wasserdampf).

Zusammenfassend erlaubt die beschriebene Vorrichtung 10 die Erzeugung eines kontinuierlichen Trägergas/Dampf-Gemisch-Stromes am als "Nutzanschluss" fungierenden Anschluss 18-3 des 4/2-Wegeventils 18, wobei die Zielkonzentration des darin enthaltenen Dampfes (z. B. Wasserdampf) variabel, ohne große Verzögerung und präzise über einen weiten Bereich (z. B. 0 bis 100 %) eingestellt werden kann.

Bevorzugt ist in der Steuereinrichtung 16 ein "Konzentrationsprogramm" gespeichert, welches vorab durch einen Benutzer eingegeben bzw. definiert wurde und welches im Folgenden durch die Steuereinrichtung 16 abgearbeitet wird. Bevorzugt werden bei der Abarbeitung eines derartigen Programms die verschiedenen Dosierungseinrichtungen unter Berücksichtigung der momentan sowie der "in naher Zukunft" gewünschten Gesamtströmungsrate sowie Dampfkonzentration kontinuierlich betrieben.

Dies bedeutet insbesondere, dass z. B. im Falle einer momentan bei Null liegenden Zielkonzentration des Dampfes (erster Betriebsmodus), die jedoch im zeitlichen Verlauf ansteigen soll (zweiter Betriebsmodus), sämtliche zur Bereitstellung des ersten gasförmigen Mischungsstromes ms1 erforderliche Vorrichtungskomponenten bereits betrieben werden, noch bevor die Dampfkonzentration tatsächlich größer als Null werden soll. Der Strom ms1 wird, solange noch nicht benötigt, über das Ventil 18 zum "Abgasanschluss" 18-4 geführt, bis der Strom ms1 tatsächlich benötigt wird und daher das Ventil 18 entsprechend umgeschaltet wird.

Wenn ausgehend von diesem zweiten Betriebsmodus eine in den dritten Betriebsmodus führende weitere Vergrößerung der Zielkonzentration stattfindet, so beginnt eine von Null verschiedene Dosierung mittels der Dosiereinrichtung 30-2. Wenn während des dritten Betriebsmodus eine noch weitere Vergrößerung der Zielkonzentration stattfinden soll, so kann hierfür vorteilhaft z. B. ein kontinuierlicher Anstieg der von der Dosiereinrichtung 30-2 dosierten Flüssigkeitsmenge bei gleichzeitig sinkender Dosierung des gesättigten Stromes gtgd durch die Einrichtung 16 vorgesehen sein.

Umgekehrt, wenn z. B. ausgehend vom dritten Betriebsmodus eine letztlich in den zweiten Betriebsmodus führende Verkleinerung der Zielkonzentration stattfinden soll, so kann durch die Einrichtung 16 z. B. angesteuert werden, dass die Dosierung des gesättigten Stromes gtgd bereits vergrößert wird, noch bevor die von der Dosiereinrichtung 30-2 dosierte Flüssigkeitsmenge auf Null abgesenkt wird (Das Absinken der Flüssigkeitsmenge auf Null bedeutet den Übergang vom dritten in den zweiten Betriebsmodus).

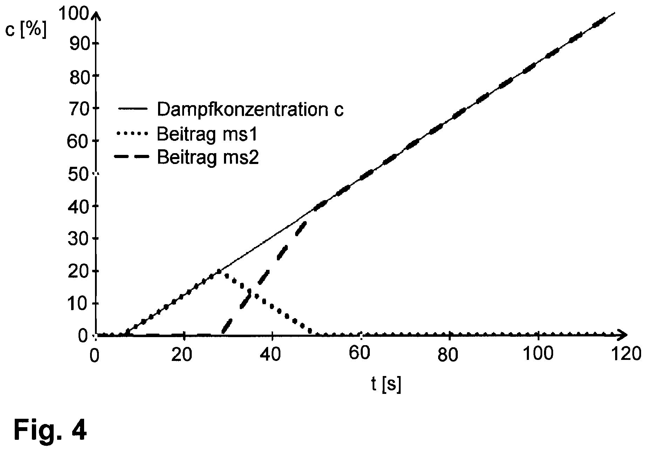

Fig. 4 zeigt ein Beispiel eines mit der Vorrichtung 10 abarbeitbaren Konzentrationsprogrammes, also eine Zielkonzentration c der Dampfkomponente im Trägergas/Dampf-Gemisch-Strom in Abhängigkeit von der Zeit t.

Im dargestellten Beispiel soll in einem zeitlichen Bereich von 0 bis 7 s eine Zielkonzentration von c = 0 eingestellt werden, wohingegen für den nachfolgenden zeitlichen Bereich von 7 bis 117 s die Zielkonzentration c linear bis auf 100 % ansteigen soll.

Dementsprechend arbeitet die Vorrichtung 10 bis zum Zeitpunkt t = 7 s im ersten Betriebsmodus, bei welchem der erste dosierte Trägergasstrom tg1 als der Trägergas/Dampf-Gemisch-Strom verwendet wird.

Ab dem Zeitpunkt t = 7 s wird das Ventil 18 umgeschaltet, so dass der erste gasförmige Mischungsstrom ms1 verwendet wird, wobei durch entsprechende Ansteuerung der Dosierungseinrichtungen 14-2, 14-3 und 30-1 bis zu einem Zeitpunkt t = 29 s (hier entsprechend einer Zielkonzentration c = 20 %) der Dampfanteil ausschließlich durch die entsprechende Erzeugung des Stromes ms1 realisiert wird.

Zum Zeitpunkt t = 29 s erfolgt ein Übergang vom zweiten Betriebsmodus in den dritten Betriebsmodus.

In einer bis zum Zeitpunkt t = 50 s (entsprechend einer Zielkonzentration c = 40 %) andauernden Zeitspanne während des dritten Betriebsmodus sinkt der durch den Strom ms1 gelieferte Beitrag und steigt der durch den Strom ms2 (bzw. den durch die Dosiereinrichtung 30-2 bewirkten Flüssigkeitsstrom) geleistete Beitrag zur gewünschten Zielkonzentration c.

Ab dem Zeitpunkt t = 50 s arbeitet die Vorrichtung 10 im dritten Betriebsmodus, wobei jedoch die Dosiereinrichtungen 14-3 und 30-1 inaktiv sind.

Im weiteren Zeitverlauf des Programms erfolgt die Einstellung der weiter steigenden Zielkonzentration c durch eine entsprechende Steigerung der von der Dosiereinrichtung 30-2 zudosierten Flüssigkeit f und ggf. gleichzeitiger Reduzierung des Trägergasstromes tg2, wenn der Gesamtdurchsatz konstant gehalten werden soll.

Bei der beschriebenen Vorrichtung 10 dient das 4/2-Wegeventil 18 dazu, einem am Ventilanschluss 18-3 angeschlossenen Zielsystem entweder das durch den Strom ms1 bzw. (im Falle einer Zudosierung von Flüssigkeit durch die Dosiereinrichtung 30-2) den Strom ms2 bereitgestellte Gemisch mit der vorbestimmt eingestellten Zielkonzentration der Dampfkomponente zuzuführen, oder aber das reine Trägergas (Strom tg1) zuzuführen. Auf diese Weise lässt sich vorteilhaft ein schneller Wechsel zwischen dampfhaltiger und dampffreier Atmosphäre für das Zielsystem erreichen. Besonders vorteilhaft ist bei der beschriebenen Ausgestaltung, dass die Zielkonzentration bereits eingestellt werden kann, d. h. ein geeignetes Mischungsverhältnis der beteiligten Mengenströme sich etablieren kann, noch bevor das Zielsystem durch entsprechende Ventilumschaltung mit dem Gemisch beaufschlagt wird. Auf diese Weise wird gegenüber einer Änderung der Mischungsverhältnisse beim Wechsel der vorbestimmten Zielkonzentration von Null auf einen von Null verschiedenen Wert eine Einsteuer- bzw. Einregelzeit deutlich verkürzt. Des Weiteren wird durch das Umschaltventil 18 die Diffusion von Dampfmolekülen aus dem Bereich der Verdampfungs/Sättigungs-Einrichtung 26 bzw. der Verdampfungs/Misch-Einrichtung 24 zuverlässig unterdrückt, ohne dass der Gasstrom zum Zielsystem unterbrochen wird. Das Zielsystem kann auf diese Weise mit zuverlässig dampffreiem Trägergas gespült werden, solange bis die Ventilstellung entsprechend wechselt.

Was den beheizten Bereich 32 der Vorrichtung 10 anbelangt, so ist dieser in einer vorteilhaften Ausgestaltung in Form eines massiven, geregelt beheizten Blockes realisiert, in welchem die betreffenden Komponenten sowie die diese verbindenden Leitungen entweder unmittelbar integriert sind oder zumindest mit dem Block thermisch gut leitend verbunden sind.

## Patentansprüche

1. Verfahren zur Erzeugung eines kontinuierlichen Trägergas/Dampf-Gemisch-Stromes (S) beinhaltend einstellbare Anteile eines Trägergases, insbesondere Inertgases, und eines Dampfes einer Flüssigkeit, insbesondere Wasser, umfassend die Schritte:
- Bereitstellen eines ersten dosierten Trägergasstromes (tg1) und Verwenden desselben als den Trägergas/Dampf-Gemisch-Strom (S) im Falle eines auf Null einzustellenden Dampfanteils im Trägergas/Dampf-Gemisch-Strom (S),
- Bereitstellen eines zweiten dosierten Trägergasstromes (tg2),
- Bereitstellen eines dosierten, mit Dampf gesättigten Trägergas/Dampf-Gemisch-Stromes (gtgd),
- Mischen des zweiten dosierten Trägergasstromes (tg2) und des dosierten gesättigten Trägergas/Dampf-Gemisch-Stromes (gtgd) zur Bereitstellung eines ersten gasförmigen Mischungsstromes (ms1) und Verwenden desselben als den Trägergas/Dampf-Gemisch-Strom (S) im Falle eines relativ niedrig einzustellenden Dampfanteils im Trägergas/Dampf-Gemisch-Strom (S),
- Bereitstellen eines dosierten Flüssigkeitsstromes (f) und Zuführen desselben zu einer Verdampfungs/Misch-Einrichtung (24) zum Verdampfen der Flüssigkeit und Mischen mit dem ersten gasförmigen Mischungsstrom (ms1) zur Bereitstellung eines zweiten gasförmigen Mischungsstromes (ms2) und Verwenden desselben als den Trägergas/Dampf-Gemisch-Strom (S) im Falle eines relativ hoch einzustellenden Dampfanteils im Trägergas/Dampf-Gemisch-Strom (S).

2. Verfahren nach Anspruch 1, wobei die Verwendung des ersten dosierten Trägergasstromes (tg1), des ersten gasförmigen Mischungsstromes (ms1) bzw. des zweiten gasförmigen Mischungsstromes (ms2) als den Trägergas/Dampf-Gemisch-Strom (S) mittels einer Ventileinrichtung (18) realisiert wird, die hierfür derart umgeschaltet wird, dass der aktuell zu verwendende der Ströme an einem Nutzauslass (18-3) der Ventileinrichtung (18) bereitgestellt wird, wohingegen wenigstens ein aktuell nicht zu verwendender der Ströme an einem Abgasauslass (18-4) der Ventileinrichtung (18) abströmen gelassen wird.

3. Verfahren nach einem der vorangehenden Ansprüche, wobei das Bereitstellen des dosierten gesättigten Trägergas/Dampf-Gemisch-Stromes (gtgd) folgende Schritte umfasst:
- Bereitstellen eines dritten dosierten Trägergasstromes (tg3),
- Bereitstellen eines weiteren dosierten Flüssigkeitsstromes (f),
- Zuführen des dritten dosierten Trägergasstromes (tg3) und des weiteren dosierten Flüssigkeitsstromes (f) zu einer Verdampfungs/Sättigungs-Einrichtung (26) zum Verdampfen der Flüssigkeit (f) und Mischen mit dem dritten dosierten Trägergasstrom (tg3).

4. Vorrichtung (10) zur Erzeugung eines kontinuierlichen Trägergas/Dampf-Gemisch-Stromes (S) beinhaltend einstellbare Anteile eines Trägergases, insbesondere Inertgases, und eines Dampfes einer Flüssigkeit, insbesondere Wasser, umfassend:
- Mittel (12-1, 14-1) zum Bereitstellen eines ersten dosierten Trägergasstromes (tg1),
- Mittel (12-2, 14-2) zum Bereitstellen eines zweiten dosierten Trägergasstromes (tg2),
- Mittel (14-3, 28, 30-1, 26) zum Bereitstellen eines dosierten, mit Dampf gesättigten Trägergas/Dampf-Gemisch-Stromes (gtgd),
- Mittel (20) zum Mischen des zweiten dosierten Trägergasstromes (tg2) und des dosierten gesättigten Trägergas/Dampf-Gemisch-Stromes (gtgd) zur Bereitstellung eines ersten gasförmigen Mischungsstromes (ms1),
- Mittel (28, 30-2) zum Bereitstellen eines dosierten Flüssigkeitsstromes (f),
- eine Verdampfungs/Misch-Einrichtung (24) zum Verdampfen der Flüssigkeit des dosierten Flüssigkeitsstromes (f) und Mischen mit dem ersten gasförmigen Mischungsstrom (ms1), zur Bereitstellung eines zweiten gasförmigen Mischungsstromes (ms2),
- Mittel (18) zum Auswählen des ersten dosierten Trägergasstromes (tg1) im Falle eines auf Null einzustellenden Dampfanteils im Trägergas/Dampf-Gemisch-Strom, des ersten gasförmigen Mischungsstromes (ms1) im Falle eines relativ niedrig einzustellenden Dampfanteils im Trägergas/Dampf-Gemisch-Strom (S), bzw. des zweiten gasförmigen Mischungsstromes (ms2) im Falle eines relativ hoch einzustellenden Dampfanteils im Trägergas/Dampf-Gemisch-Strom (S), als den Trägergas/Dampf-Gemisch-Strom (S).

5. Vorrichtung (10) nach Anspruch 4, wobei die Mittel (12-1, 14-1) zum Bereitstellen des ersten dosierten Trägergasstromes (tg1) und/oder die Mittel (12-2, 14-2) zum Bereitstellen des zweiten dosierten Trägergasstromes (tg2) aufweisen:
- einen Trägergaszufuhranschluss (12-1, 12-2) oder ein Trägergasreservoir,
- eine steuerbare Dosiereinrichtung (14-1, 14-2) zur Gasdosierung.

6. Vorrichtung (10) nach Anspruch 4 oder 5, wobei die Mittel (14-3, 28, 30, 26) zum Bereitstellen des dosierten, mit Dampf gesättigten Trägergas/Dampf-Gemisch-Stromes (gtgd) aufweisen:
- Mittel (12-3, 14-3) zum Bereitstellen eines dritten dosierten Trägergasstromes (tg3),
- Mittel (28, 30-2) zum Bereitstellen eines weiteren dosierten Flüssigkeitsstromes (f),
- eine Verdampfungs/Sättigungs-Einrichtung (26) zum Verdampfen der Flüssigkeit des weiteren dosierten Flüssigkeitsstromes (f) und zum Mischen mit dem dritten dosierten Trägergasstrom (tg3).

7. Vorrichtung (10) nach einem der Ansprüche 4 bis 6, wobei die Mittel (28, 30-1) zum Bereitstellen des dosierten Flüssigkeitsstromes (f) aufweisen:
- einen Flüssigkeitszufuhranschluss oder ein Flüssigkeitsreservoir (28),
- eine steuerbare Dosiereinrichtung (30-1) zur Flüssigkeitsdosierung.

8. Vorrichtung (10) nach einem der Ansprüche 4 bis 7, wobei die Mittel (18) zum Auswählen des als den Trägergas/Dampf-Gemisch-Strom (S) zu verwendenden Stromes von einer Ventileinrichtung (18) gebildet sind, die derart steuerbar umschaltbar ausgebildet ist, dass der aktuell zu verwendende der Ströme an einem Nutzauslass (18-3) der Ventileinrichtung (18) bereitgestellt wird, wohingegen wenigstens ein aktuell nicht verwendeter der Ströme an einem Abgasauslass (18-4) der Ventileinrichtung (18) abströmen gelassen wird.

9. Vorrichtung (10) nach Anspruch 8, wobei die Ventileinrichtung (18) ein 4/2-Wegeventil aufweist
- mit einem ersten Ventilanschluss (18-1) zur Zufuhr des ersten dosierten Trägergasstromes (tg1),
- mit einem zweiten Ventilanschluss (18-2) zur Zufuhr des zweiten bzw. dritten gasförmigen Mischungsstromes (ms1, ms2),
- mit einem dritten Ventilanschluss (18-3), als "Nutzanschluss", zum Bereitstellen des Trägergas/Dampf-Gemisch-Stromes (S), und
- mit einem vierten Ventilanschuss (18-4), als "Abgasanschluss", zur Abströmenlassen nicht zu verwendender Ströme,
wobei in einer ersten Schaltstellung des Ventils (18) der erste Ventilanschluss (18-1) mit dem dritten Ventilanschluss (18-3) und der zweite Ventilanschluss (18-2) mit dem vierten Ventilanschluss (18-4) verbunden ist,
und wobei in einer zweiten Schaltstellung des Ventils(18) der erste Ventilanschluss (18-1) mit dem vierten Ventilanschluss (18-4) und der zweite Ventilanschluss (18-2) mit dem dritten Ventilanschluss (18-3) verbunden ist.

## Claims

1. A method for generating a continuous carrier gas/vapor mixture stream (S) containing adjustable proportions of a carrier gas, in particular inert gas, and of a vapor of a liquid, in particular water, comprising the steps:
- providing a first metered carrier gas stream (tg1) and use thereof as the carrier gas/vapor mixture stream (S) in the case of a vapor proportion to be adjusted to zero in the carrier gas/vapor mixture stream (S),
- providing a second metered carrier gas stream (tg2),
- providing a metered, vapor-saturated carrier gas/vapor mixture stream (gtgd),
- mixing the second metered carrier gas stream (tg2) and the metered saturated carrier gas/vapor mixture stream (gtgd) to provide a first gaseous mixture stream (ms1) and use thereof as the carrier gas/vapor mixture stream (S) in the case of a vapor proportion to be adjusted to be relatively low in the carrier gas/vapor mixture stream (S),
- providing a metered liquid stream (f) and feeding thereof to an evaporation/mixing device (24) for evaporating the liquid and mixing with the first gaseous mixture stream (ms1) to provide a second gaseous mixture stream (ms2) and use thereof as the carrier gas/vapor mixture stream (S) in the case of a vapor proportion to be adjusted to be relatively high in the carrier gas/vapor mixture stream (S).

2. The method according to claim 1, wherein the use of the first metered carrier gas stream (tg1), of the first gaseous mixture stream (ms1) or of the second gaseous mixture stream (ms2), respectively, as the carrier gas/vapor mixture stream (S) is realized by means of a valve device (18), which is switched over for this purpose in such a way that the one of the streams currently to be used is provided at an operational outlet (18-3) of the valve device (18), whereas at least one of the streams not currently to be used is allowed to discharge at a waste gas outlet (18-4) of the valve device (18).

3. The method according to one of the preceding claims, wherein the provision of the metered saturated carrier gas/vapor mixture stream (gtgd) comprises the following steps:
- providing a third metered carrier gas stream (tg3),
- providing a further metered liquid stream (f),
- feeding the third metered carrier gas stream (tg3) and the further metered liquid stream (f) to an evaporation/saturation device (26) for evaporating the liquid (f) and mixing with the third metered carrier gas stream (tg3) .

4. A device (10) for generating a continuous carrier gas/vapor mixture stream (S) containing adjustable proportions of a carrier gas, in particular inert gas, and of a vapor of a liquid, in particular water, comprising:
- means (12-1, 14-1) for providing a first metered carrier gas stream (tg1),
- means (12-2, 14-2) for providing a second metered carrier gas stream (tg2),
- means (14-3, 28, 30-1, 26) for providing a metered, vapor-saturated carrier gas/vapor mixture stream (gtgd),
- means (20) for mixing the second metered carrier gas stream (tg2) and the metered saturated carrier gas/vapor mixture stream (gtgd) to provide a first gaseous mixture stream (ms1),
- means (28, 30-2) for providing a metered liquid stream (f),
- an evaporation/mixing device (24) for evaporating the liquid of the metered liquid stream (f) and mixing with the first gaseous mixture stream (ms1), for providing a second gaseous mixture stream (ms2),
- means (18) for selecting the first metered carrier gas stream (tg1) in the case of a vapor proportion to be adjusted to zero in the carrier gas/vapor mixture stream, the first gaseous mixture stream (ms1) in the case of a vapor proportion to be adjusted to be relatively low in the carrier gas/vapor mixture stream (S), or the second gaseous mixture stream (ms2), respectively, in the case of a vapor proportion to be adjusted to be relatively high in the carrier gas/vapor mixture stream (S), as the carrier gas/vapor mixture stream (S).

5. The device (10) according to claim 4, wherein the means (12-1, 14-1) for providing the first metered carrier gas stream (tg1) and/or the means (12-2, 14-2) for providing the second metered carrier gas stream (tg2) have:
- a carrier gas supply connection (12-1, 12-2) or a carrier gas reservoir,
- a controllable metering device (14-1, 14-2) for the gas metering.

6. The device (10) according to claim 4 or 5, wherein the means (14-3, 28, 30, 26) for providing the metered, vapor-saturated carrier gas/vapor mixture stream (gtgd) have:
- means (12-3, 14-3) for providing a third metered carrier gas stream (tg3),
- means (28, 30-2) for providing a further metered liquid stream (f),
- an evaporation/saturation device (26) for evaporating the liquid of the further metered liquid stream (f) and for mixing with the third metered carrier gas stream (tg3).

7. The device (10) according to one of claims 4 to 6, wherein the means (28, 30-1) for providing the metered liquid stream (f) have:
- a liquid supply connection or a liquid reservoir (28),
- a controllable metering device (30-1) for the liquid metering.

8. The device (10) according to one of claims 4 to 7, wherein the means (18) for selecting the stream to be used as the carrier gas/vapor mixture stream (S) are formed by a valve device (18), which is embodied to be capable of being switched over in a controlled manner in such a way that the one of the streams currently to be used is provided at an operational outlet (18-3) of the valve device (18), whereas at least one of the streams not currently being used is allowed to discharge at a waste gas outlet (18-4) of the valve device (18).

9. The device (10) according to claim 8, wherein the valve device (18) has a 4/2-way valve
- comprising a first valve connection (18-1) for supplying the first metered carrier gas stream (tg1),
- comprising a second valve connection (18-2) for supplying the second or third gaseous mixture stream (ms1, ms2), respectively,
- comprising a third valve connection (18-3), as "operational connection", for providing the carrier gas/vapor mixture stream (S), and
- comprising a fourth valve connection (18-4), as "waste gas connection", for allowing the discharge of streams not to be used,
wherein, in a first switching position of the valve (18), the first valve connection (18-1) is connected to the third valve connection (18-3), and the second valve connection (18-2) is connected to the fourth valve connection (18-4),
and wherein, in a second switching position of the valve (18), the first valve connection (18-1) is connected to the fourth valve connection (18-4), and the second valve connection (18-2) is connected to the third valve connection (18-3).

## Revendications

1. Procédé, destiné à créer un flux continu mixte gaz porteur/vapeur (S), contenant des parts réglables d'un gaz porteur, notamment d'un gaz inerte et d'une vapeur d'un liquide, notamment de l'eau, comprenant les étapes consistant à :
- mettre à disposition un premier flux de gaz porteur (tg1) dosé et utiliser ce dernier comme étant le flux mixte gaz porteur/vapeur (S) dans le cas d'une part de vapeur qui doit être réglée à zéro dans le flux mixte gaz porteur/vapeur (S),
- mettre à disposition un deuxième flux de gaz porteur (tg2) dosé,
- mettre à disposition un flux mixte gaz porteur/vapeur (gtgd) dosé, saturé de vapeur,
- mélanger le deuxième flux de gaz porteur (tg2) dosé et le flux mixte gaz porteur/vapeur (gtgd) dosé saturé, pour la mise à disposition d'un premier flux gazeux mixte (ms1) et utiliser ce dernier comme étant le flux mixte gaz porteur/vapeur (S) dans le cas d'une part de vapeur qui doit être réglée à une valeur relativement basse dans le flux mixte gaz porteur/vapeur (S),
- mettre à disposition un flux de liquide dosé (f) et alimenter ce dernier vers un système mélangeur/évaporateur (24), pour évaporer le liquide et mélanger avec le premier flux gazeux mixte (ms1) pour la mise à disposition d'un deuxième flux gazeux mixte (ms2) et utiliser ce dernier comme étant le flux mixte gaz porteur/vapeur (S) dans le cas d'une part de vapeur qui doit être réglée à une valeur relativement élevée dans le flux mixte gaz porteur/vapeur (S).

2. Procédé selon la revendication 1, l'utilisation du premier flux de gaz porteur (tg1) dosé, du premier flux gazeux mixte (ms1) ou du deuxième flux gazeux mixte (ms2) comme étant le flux mixte gaz porteur/vapeur (S) étant réalisée à l'aide d'un système de soupape (18) que l'on commute à cet effet de telle sorte que celui parmi les flux qui doit être utilisé actuellement soit mis à disposition sur une sortie utile (18-3) du système de soupape (18), alors qu'en revanche, on laisse s'écouler au moins l'un des flux qui ne doit pas être utilisé actuellement d'une sortie d'échappement (18-4) du système de soupape (18).

3. Procédé selon l'une quelconque des revendications précédentes, la mise à disposition du flux mixte gaz porteur/vapeur (gtgd) saturé dosé comprenant les étapes suivantes, consistant à :
- mettre à disposition un troisième flux de gaz porteur (tg3) dosé,
- mettre à disposition un flux de liquide dosé (f) supplémentaire,
- alimenter le troisième flux de gaz porteur (tg3) dosé et le flux de liquide dosé (f) supplémentaire vers un système de saturation/d'évaporation (26) pour l'évaporation du liquide(f) et le mélange avec le troisième d flux de gaz porteur (tg3) dosé.

4. Dispositif (10), destiné à créer un flux continu mixte gaz porteur/vapeur (S), contenant des parts réglables d'un gaz porteur, notamment d'un gaz inerte et d'une vapeur d'un liquide, notamment de l'eau, comprenant :
- des moyens (12-1, 14-1), destinés à mettre à disposition un premier flux de gaz porteur (tg1) dosé,
- des moyens (12-2, 14-2), destinés à mettre à disposition un deuxième flux de gaz porteur (tg2) dosé,
- des moyens (14-3, 28, 30-1, 26), destinés à mettre à disposition un flux mixte gaz porteur/vapeur dosé, saturé de vapeur (gtgd),
- des moyens (20), destinés à mélanger le deuxième flux de gaz porteur (tg2) dosé et le flux mixte dosé gaz porteur/vapeur (gtgd) saturé, pour la mise à disposition d'un premier flux gazeux mixte (ms1),
- des moyens (28, 30-2), destinés à mettre à disposition un flux de liquide dosé (f),
- un système mélangeur/évaporateur (24), pour l'évaporation du liquide du flux de liquide dosé (f) et le mélange avec le premier flux gazeux mixte (ms1), pour la mise à disposition d'un deuxième flux gazeux mixte (ms2),
- des moyens (18), destinés à sélectionner comme étant le flux mixte gaz porteur/vapeur (S) le premier flux de gaz porteur (tg1) dosé, dans le cas où la part de vapeur dans le flux mixte gaz porteur/vapeur doit être réglée à zéro, le premier flux gazeux mixte (ms1), dans le cas où la part de vapeur dans le flux mixte gaz porteur/vapeur (S) doit être réglée à une valeur relativement faible ou du deuxième flux gazeux mixte (ms2), dans le cas où la part de vapeur dans le flux mixte gaz porteur/vapeur (S) doit être réglée à une valeur relativement élevée.

5. Dispositif (10) selon la revendication 4, les moyens (12-1, 14-1) destinés à mettre à disposition le premier flux de gaz porteur (tg1) dosé et/ou les moyens (12-2, 14-2) destinés à mettre à disposition le deuxième flux de gaz porteur (tg2) dosé comportant :
- un branchement d'alimentation de gaz porteur (12-1, 12-2) ou un réservoir de gaz porteur,
- un système de dosage (14-1, 14-2), susceptible d'être commandé pour le dosage du gaz.

6. Dispositif (10) selon la revendication 4 ou 5, les moyens (14-3, 28, 30, 26) destinés à mettre à disposition le flux mixte gaz porteur/vapeur dosé, saturé de vapeur (gtgd) comportant :
- des moyens (12-3, 14-3), destinés à mettre à disposition un troisième flux de gaz porteur (tg3) dosé,
- des moyens (28, 30-2), destinés à mettre à disposition un flux de liquide dosé (f) supplémentaire,
- un système de saturation/d'évaporation (26) pour l'évaporation du liquide du flux de liquide dosé (f) supplémentaire et pour le mélange avec le troisième flux de gaz porteur (tg3) dosé.

7. Dispositif (10) selon l'une quelconque des revendications 4 à 6, les moyens (28, 30-1) destinés à mettre à disposition le flux de liquide dosé (f) comportant :
- un branchement d'alimentation de liquide ou un réservoir à liquide (28),
- un système de dosage (30-1) susceptible d'être commandé, pour le dosage du liquide.

8. Dispositif (10) selon l'une quelconque des revendications 4 à 7, les moyens (18) destinés à sélectionner le flux qui doit être utilisé comme étant le flux mixte gaz porteur/vapeur (S) étant formés d'un système de soupape (18) qui est conçu en étant susceptible d'être commandé, commuté de telle sorte que celui parmi les flux qui doit être utilisé actuellement soit mis à disposition sur une sortie utile (18-3) du système de soupape (18), alors qu'en revanche, on laisse s'écouler au moins l'un des flux qui ne doit pas être utilisé actuellement d'une sortie d'échappement (18-4) du système de soupape (18).

9. Dispositif (10) selon la revendication 8, le système de soupape (18) comportant une soupape à 4/2 voies
- pourvue d'un premier branchement de soupape (18-1), destiné à alimenter le premier flux de gaz porteur (tg1) dosé,
- pourvue d'un deuxième branchement de soupape (18-2), destiné à alimenter le deuxième ou le troisième flux gazeux mixte (ms1, ms2),
- pourvue d'un troisième branchement de soupape (18-3), en tant que « branchement utile », destiné à mettre à disposition le flux mixte gaz porteur/vapeur (S) et
- pourvue d'un quatrième branchement de soupape (18-4), en tant que « branchement d'échappement », pour laisser s'écouler les flux qui ne doivent pas être utilisés,
dans une première position de commutation de la soupape (18), le premier branchement de soupape (18-1) étant relié avec le troisième branchement de soupape (18-3) et le deuxième branchement de soupape (18-2) étant relié avec le quatrième branchement de soupape (18-4),
et dans une deuxième position de commutation de la soupape (18), le premier branchement de soupape (18-1) étant relié avec le quatrième branchement de soupape (18-4) et le deuxième branchement de soupape (18-2) étant relié avec le troisième branchement de soupape (18-3).
